# EUROPÄISCHE PATENTSCHRIFT

(11) **EP 1 923 166 B1**
(45) Veröffentlichungstag und Bekanntmachung des Hinweises auf die Patenterteilung: **07.01.2009**
(21) Anmeldenummer: 06023800.3
(22) Anmeldetag: 16.11.2006
(51) Int. Cl.: B23K 26/38, B23K 26/08, B23K 101/06

(54) **Maschinelle Anordnung zum schneidenden Bearbeiten von Rohren mittels eines Schneidstrahls**
Processing machine for jet cutting of pipes
Dispositif pour le découpage de tubes par un jet de coupage

(43) Veröffentlichungstag der Anmeldung: 21.05.2008
(73) Patentinhaber: Trumpf Laser- und Systemtechnik GmbH, 71254 Ditzingen (DE)
(72) Erfinder: Widmann, Dominik, 75378 Bad Liebenzell (DE); Fischer, Gunter, 71297 Mönsheim (DE)
(74) Vertreter: Kohler Schmid Möbus

(56) Entgegenhaltungen:
- DE-U1- 20 216 214
- JP-A- 2 037 982
- JP-A- 4 158 996

## Beschreibung

Die Erfindung betrifft eine maschinelle Anordnung zum schneidenden Bearbeiten von Rohren mittels eines Schneidstrahls, mit
- einem Schneidkopf,
- einem Rohrhalter,
- einer Fanglanze sowie
- einem Abstreifer,
wobei
- von dem Schneidkopf aus der Schneidstrahl entlang einer Bearbeitungsachse des Schneidkopfes, die bei eingeschaltetem Schneidstrahl die Schneidstrahlachse bildet, in Rohrquerrichtung auf ein zu bearbeitendes Rohr richtbar ist und der Schneidstrahl und das Rohr unter Abtrennen wenigstens eines Rohrabschnittes relativ zueinander in Rohrumfangsrichtung bewegbar sind,
- der Rohrhalter, in Rohrlängsrichtung gesehen, an einer Seite der Bearbeitungsachse des Schneidkopfes angeordnet und zur Festlegung des zu bearbeitenden Rohres vorgesehen ist,
- der Abstreifer an der dem Rohrhalter in Rohrlängsrichtung gegenüberliegenden Seite der Bearbeitungsachse des Schneidkopfes angeordnet ist,
- die Fanglanze an der dem Rohrhalter in Rohrlängsrichtung gegenüberliegenden Seite der Bearbeitungsachse des Schneidkopfes in das Rohrinnere des zu bearbeitenden Rohres einführbar und dabei mit einem Überstand gegenüber dem Abstreifer in Rohrlängsrichtung zu der Bearbeitungsachse des Schneidkopfes hin anordenbar ist,
- wenigstens ein abgetrennter Rohrabschnitt an der zu der Bearbeitungsachse des Schneidkopfes hin liegenden Seite des Abstreifers auf der Fanglanze ablegbar ist und
- der oder die auf der Fanglanze abgelegten Rohrabschnitte mittels des Abstreifers von der Fanglanze abstreifbar ist bzw. sind, indem die Fanglanze mit einer von der Bearbeitungsachse des Schneidkopfes weg gerichteten Rückzugsbewegung relativ zu dem Abstreifer in Rohrlängsrichtung bewegbar ist.

Eine derartige maschinelle Anordnung wird von der Firma TRUMPF^{©}, 71254 Ditzingen, Deutschland unter der Produktbezeichnung TUBEMATIC^{®} RC vertrieben. Im Falle des Standes der Technik dient ein in einem Laserschneidkopf erzeugter Laserschneidstrahl zum Ablängen von Rohrabschnitten an langen Metallrohren. Zu diesem Zweck ist das zu bearbeitende Rohr mit einem Längsende an einem um die Rohrachse drehbaren Spannfutter eingespannt, das seinerseits an einem in Rohrlängsrichtung verfahrbaren Vorschubwagen angebracht ist. Zum Ablängen der einzelnen Rohrabschnitte wird das zu bearbeitende Rohr durch Verfahren des Vorschubwagens in Rohrlängsrichtung gegenüber dem Laserschneidkopf um die jeweilige Rohrabschnittslänge nachgesetzt. Bei der Nachsetzbewegung des zu bearbeitenden Rohres befindet sich der Laserschneidkopf im Außerfunktionszustand. Im Anschluss an eine Nachsetzbewegung wird der Laserschneidstrahl auf das zu bearbeitende Rohr gerichtet und das Rohr wird durch Drehen des an dem Vorschubwagen angeordneten Spannfutters um die Rohrachse gedreht. Dadurch erstellt der Laserschneidstrahl einen in Rohrumfangsrichtung durchgehenden Trennschnitt. An der dem Spannfutter sowie dem Vorschubwagen in Rohrlängsrichtung gegenüberliegenden Seite des Laserschneidkopfes ist eine Fanglanze in Form eines so genannten "Catchers" angeordnet. Bei dem Catcher handelt es sich um eine Kühl- und/oder Spüllanze, wie sie im Einzelnen in EP 1 454 700 A1 beschrieben ist.

Vor Beginn einer schneidenden Rohrbearbeitung wird der an einem Catcherschlitten angebrachte Catcher gegenüber dem Laserschneidkopf in Rohrlängsrichtung in eine Arbeitsstellung bewegt. Befindet sich der Catcher in der Arbeitsstellung, so verläuft die Bearbeitungsachse des Laserschneidkopfes durch eine in dem Mantel des Catchers ausgesparte Auffangöffnung. Zwischen dem Laserschneidkopf und dem Catcherschlitten ist an dem Maschinenbett der vorbekannten Anordnung ein Abstreifer starr, dass heißt ortsunveränderlich, montiert. Der Abstreifer ist bei Arbeitsstellung des Catchers nahe dem Catcherschlitten angeordnet und wird in Rohrlängsrichtung von dem Catcher durchsetzt.

Wird das zu bearbeitende Rohr vor Erstellen eines Trennschnittes in Rohrlängsrichtung positioniert, so läuft der Catcher an dem zu ihm hin weisenden Längsende des Rohres in das Rohrinnere ein. Metallspritzer, die bei dem Schneidvorgang im Rohrinnern anfallen, gelangen durch die Auffangöffnung in dem Mantel des Catchers in das Catcherinnere und werden von dort aus abgeführt. Nach Fertigstellen des Trennschnittes wird der abgetrennte Rohrabschnitt unter Schwerkraftwirkung auf dem Catcher abgelegt. Bei ausgeschaltetem Laserschneidstrahl wird anschließend das zu bearbeitende Rohr durch Verfahren des Vorschubwagens in Rohrlängsrichtung nachgesetzt. Das beim Nachsetzen vorauseilende Rohrende verschiebt dabei den auf dem Catcher bereits abgelegten Rohrabschnitt in Richtung auf den Catcherschlitten. Folgt nun ein zweiter Trennschnitt, so wird auch der dabei abgetrennte Rohrabschnitt auf dem Catcher abgelegt. Die beschriebenen Abläufe können wiederholt werden, bis die gesamte Catcherlänge durch darauf aufgefädelte Rohrabschnitte belegt ist. Nun verfährt der Catcherschlitten gemeinschaftlich mit dem daran angebrachten Catcher in Rohrlängsrichtung von dem Laserschneidkopf weg. Die auf dem Catcher aufgefädelten Rohrabschnitte werden infolgedessen durch den an dem Maschinenbett der vorbekannten Anordnung ortsfest angebrachten Abstreifer von dem Catcher abgestreift und fallen auf eine Entladerampe, von wo aus sie schließlich aus dem Nahbereich der maschinellen Anordnung abgeführt werden.

Eine flexible Rohrbearbeitung bei insbesondere zeitlich optimiertem Arbeitsablauf zu ermöglichen, hat sich die vorliegende Erfindung zum Ziel gesetzt.

Erfindungsgemäß gelöst wird diese Aufgabe durch die maschinelle Anordnung gemäß Patentanspruch 1.

Im Falle der Erfindung ist demnach ein Abstreifer vorgesehen, der gegenüber der Bearbeitungsachse des Schneidkopfes variabel positioniert werden kann. Dadurch wird insbesondere die Möglichkeit eröffnet, den schneidkopfseitigen Überstand der in der Arbeitsstellung befindlichen Fanglanze gegenüber dem Abstreifer an wechselnde Bearbeitungsbedingungen anzupassen. Im Interesse eines zeitlich optimierten Arbeitsablaufes sollte der genannte Überstand der Fanglanze allenfalls unwesentlich länger sein als unbedingt erforderlich, um den oder die bei einem Entladevorgang von der Fanglanze abzustreifenden Rohrabschnitte aufnehmen zu können. Eine in diesem Sinne vorgenommene Optimierung der Länge des Überstandes der Fanglanze gegenüber dem Abstreifer bedingt eine Minimierung der Weglänge, über welche die Fanglanze zum Abstreifen des oder der auf der Fanglanze aufgefädelten Rohrabschnitte in Rückzugsrichtung zu bewegen ist. Aus der Minimierung der Weglänge der Rückzugsbewegung der Fanglanze wiederum resultiert eine Minimierung der für das Ausschleusen der erstellen Rohrabschnitte benötigten Entladezeit, die wenigstens teilweise eine Bearbeitungs-Totzeit darstellt.

Können an der maschinellen Anordnung Fanglanzen mit unterschiedlichen Längen eingesetzt werden, so sorgt die erfindungsgemäße Positionierbarkeit des Abstreifers dafür, dass an jeder der unterschiedlich langen Fanglanzen die maximale Fanglanzenlänge zum Auffädeln von abgetrennten Rohrabschnitten zur Verfügung gestellt werden kann. Ist eine für die Bearbeitung von Rohren mit großem Durchmesser vorgesehene lange Fanglanze durch eine kurze Fanglanze zu ersetzen, wie sie bei der Bearbeitung von Rohren mit kleinem Durchmesser zum Einsatz kommt, so lässt sich der Abstreifer abgestimmt auf die Fanglanzenlänge aus einer der großen Fanglanzenlänge zugeordneten schneidkopffernen Position in eine auf die kurze Fanglanze abgestimmte schneidkopfnahe Position umsetzen. Umgekehrt kann der Abstreifer bei Austausch einer kurzen Fanglanze gegen eine lange Fanglanze aus einer schneidkopfnahen in eine schneidkopfferne Position überführt werden. Beide Positionen des Abstreifers sind vorzugsweise derart zu wählen, dass sich schneidkopfseitig ein maximaler, zum Auffädeln abgetrennter Rohrabschnitte nutzbarer Überstand der jeweiligen Fanglanze gegenüber dem Abstreifer ergibt. Dadurch können unabhängig von der Länge der im Einsatz befindlichen Fanglanze die Anzahl der Entladevorgänge und die damit verbundenen Bearbeitungs-Totzeiten auf ein Minimum reduziert werden.

Mittels der erfindungsgemäßen Anordnung gleichfalls optimiert realisierbar sind wechselnde Entladestrategien. Zum Beispiel die Beschaffenheit, insbesondere die Wandstärke und/oder die Endenkontur eines abgetrennten Rohrabschnittes kann es erforderlich machen, diesen Rohrabschnitt einzeln zu entladen. Wäre in diesem Fall der schneidkopfseitige Überstand der Fanglanze gegenüber dem Abstreifer maximal, so würde von dem zu entladenden Rohrabschnitt lediglich eine verhältnismäßig geringe schneidkopfseitige Teillänge des Überstandes der Fanglanze belegt. Gleichwohl müsste die Fanglanze zum Abstreifen des Rohrabschnittes über die Gesamtlänge des Überstandes in Rückzugsrichtung bewegt werden. Die benötigte Entladezeit und damit auch die sich dadurch ergebende Bearbeitungs-Totzeit wären folglich länger als unbedingt erforderlich. Die erfindungsgemäße Beweglichkeit des Abstreifers gestattet in Bearbeitungsfällen der beschriebenen Art eine Verkürzung der Entladezeit sowie der damit verbundenen Bearbeitungs-Totzeit. So lässt sich der Abstreifer im Falle der Erfindung in Rohrlängsrichtung derart positionieren, dass sich schneidkopfseitig ein auf die Länge des einzeln zu entladenden Rohrabschnittes abgestimmter Überstand der Fanglanze ergibt. Zum Entladen des Rohrabschnittes ist die Fanglanze dann lediglich über die reduzierte Überstandslänge in Rückzugsrichtung zu bewegen.

Besondere Ausführungsarten der maschinellen Anordnung gemäß Patentanspruch 1 ergeben sich aus den abhängigen Patentansprüchen 2 bis 11.

Gemäß Patentanspruch 2 ist für den Abstreifer in Weiterbildung der Erfindung eine Abstreifer-Längsführung vorgesehen. Die Abstreifer-Längsführung vereinfacht die Überführung des Abstreifers in unterschiedliche Positionen gegenüber der Bearbeitungsachse des Schneidkopfes. Sie sorgt für eine definierte Positionierbewegung des Abstreifers in Rohrlängsrichtung.

Eine bevorzugte Bauart der Erfindung zeichnet sich dadurch aus, dass die Abstreifer-Längsführung sowie eine Fanglanzen-Längsführung von einer gemeinsamen, an einer Tragstruktur der erfindungsgemäßen Anordnung vorgesehenen Längsführungseinrichtung Gebrauch machen (Patentanspruch 3). Die Doppelnutzung der tragstrukturseitigen Längsführungseinrichtung ist in mehrerlei Hinsicht zweckmäßig. Beispielhaft zu nennen sind konstruktive und montagetechnische Vorteile. Darüber hinaus lassen sich die mit der tragstrukturseitigen Längsführungseinrichtung zusammenwirkenden abstreiferseitigen und fanglanzenseitigen Längsführungseinrichtungen in Rohrlängsrichtung dicht nebeneinander anordnen. Infolgedessen kann der schneidkopfseitige Überstand der mit der fanglanzenseitigen Längsführungseinrichtung versehenen Fanglanze gegenüber dem mit der abstreiferseitigen Längsführungseinrichtung versehenen Abstreifer maximiert werden. Alternativ besteht die Möglichkeit, einen vorgegebenen Überstand der Fanglanze gegenüber dem Abstreifer mit minimaler Länge der Fanglanze zu realisieren. Geringe Fanglanzenlängen sind insofern von Vorteil, als sich die Abfuhr beispielsweise von an der Bearbeitungsstelle des Schneidstrahls anfallenden Materialspritzern durch das Innere der Fanglanze umso einfacher gestaltet, je kürzer die Fanglanze ist. Auch unter dem Gesichtspunkt der Stabilität bzw. der Steifigkeit der Fanglanze sind kleine Fanglanzenlängen zu bevorzugen. So handelt es sich bei Fanglanzen um kragarmartige Bauteile, deren Funktionsfähigkeit wesentlich von einer hinreichenden Eigensteifigkeit sowie von einer hinreichend stabilen Einspannung der Fanglanze abhängig ist. Insoweit aber sind kleine Fanglanzenlängen besser beherrschbar als große Fanglanzenlängen.

Von einer weiteren Möglichkeit zur Nutzung der tragstrukturseitigen Längsführungseinrichtung macht die Erfindungsbauart nach Patentanspruch 4 Gebrauch. In diesem Fall bildet die tragstrukturseitige Längsführungseinrichtung auch einen Teil einer Antriebs-Längsführung, mittels derer eine mit der Fanglanze verbundene Antriebseinheit bei ihrer Bewegung in Rohrlängsrichtung geführt ist.

Vorteilhafterweise ist die Abstreifer-Längsführung und/oder die Fanglanzen-Längsführung und/oder die Antriebs-Längsführung der erfindungsgemäßen Anordnung als Linearführung ausgebildet (Patentanspruch 5). Bei Linearführungen der vorgesehenen Art handelt es sich um bewährte Maschinenelemente, mittels derer sich die erforderliche Positioniergenauigkeit problemlos gewährleisten lässt.

Die Patentansprüche 6 und 7 betreffen die erfindungsgemäßen Antriebsalternativen für den Abstreifer. Gemäß Patentanspruch 6 wird die Positionierbewegung des Abstreifers manuell ausgeführt. Im Falle der Erfindungsbauart nach Patentanspruch 7 ist für den Abstreifer ein motorischer Positionierbetrieb vorgesehen. Durch Einsatz eines motorischen Positionierantriebes lässt sich der Automatisierungsgrad der erfindungsgemäßen Anordnung erhöhen.

Die in Patentanspruch 8 beschriebene Ausführungsform der Erfindung verfügt über einen motorischen Positionierantrieb für den Abstreifer und darüber hinaus auch über einen motorischen Fanglanzenantrieb. Insbesondere im Interesse eines konstruktiv einfachen Aufbaus der Gesamtanordnung nutzen beide Antriebe eine gemeinsame Antriebseinrichtung, die ihrerseits an einer Tragstruktur der maschinellen Anordnung vorgesehen ist. Als gemeinsame tragstrukturseitige Antriebseinrichtung in Frage kommt insbesondere eine Zahnstange, in die sowohl ein Antriebszahnrad des motorischen Positionierantriebes für den Abstreifer als auch ein Antriebszahnrad des motorischen Fanglanzenantriebes eingreifen kann.

Im Interesse einer weitgehenden Automatisierung der erfindungsgemäßen Anordnung sind die kennzeichnenden Merkmale der Patentansprüche 9 bis 11 vorgesehen.

Gemäß Patentanspruch 9 werden die unterschiedlichen Positionen, in welche der Abstreifer mit einer Positionierbewegung in Rohrlängsrichtung überführbar ist, mit Hilfe einer numerischen Positioniersteuerung definiert. Eine derartige Positioniersteuerung lässt sich sowohl bei manuellem Antrieb als auch bei motorischem Antrieb der Positionierbewegung des Abstreifers einsetzen. Bei manuellem Positionieren des Abstreifers kann die numerische Positioniersteuerung beispielsweise die Position vorgeben, in welche der Abstreifer von Hand zu bewegen ist. Bei Einsatz eines motorischen Positionierantriebes kann die numerische Positioniersteuerung durch Steuerung des Antriebsmotors für den Abstreifer eine exakte Positionierung des Abstreifers in Rohrlängsrichtung bewirken.

Im Falle der Erfindungsbauart nach Patentanspruch 10 ist die numerische Positioniersteuerung des Abstreifers in eine übergeordnete numerische Anordnungssteuerung integriert. Die Positionierung des Abstreifers in Rohrlängsrichtung kann folglich automatisiert auf sonstige Funktionen der maschinellen Anordnung abgestimmt werden. Beispielsweise lässt sich die Position, in welche der Abstreifer in Rohrlängsrichtung zu überführen ist, in Abhängigkeit von der in der Anordnungssteuerung hinterlegten Gesamtlänge der von der Fanglanze bei einem Entladevorgang abzustreifenden Rohrabschnitte definieren.

Nach Patentanspruch 11 werden diejenigen Positionen, in welchen der Abstreifer in Rohrlängsrichtung überführt worden ist, durch eine numerische Steuerung der erfindungsgemäßen Anordnung erfasst. Die erfassten Positionen des Abstreifers dienen dann als Grundlage für die Steuerung sonstiger Anordnungsfunktionen. Beispielsweise kann die Bewegung der Fanglanze in Rohrlängsrichtung unter Berücksichtigung der von dem Abstreifer in Rohrlängsrichtung eingenommenen Position gesteuert werden.

Nachstehend wird die Erfindung anhand beispielhafter schematischer Darstellungen näher erläutert. Es zeigen:
- Figuren 1a, 1b und 1c:: eine maschinelle Anordnung zum schneidenden Bearbeiten von Rohren mit langer Fanglanze und motorischem Abstreiferantrieb in unterschiedlichen Phasen einer ersten Rohrbearbeitung,
- Figuren 2a und 2b:: die maschinelle Anordnung gemäß den Figuren 1a bis 1c in unterschiedlichen Phasen einer zweiten Rohrbearbeitung,
- Figur 3:: die maschinelle Anordnung gemäß den Figuren 1a bis 2b mit kurzer Fanglanze und manuellem Abstreiferantrieb sowie
- Figur 4:: das Detail D in Figur 2b in der Ansicht in Richtung des Pfeils III in Figur 2b.

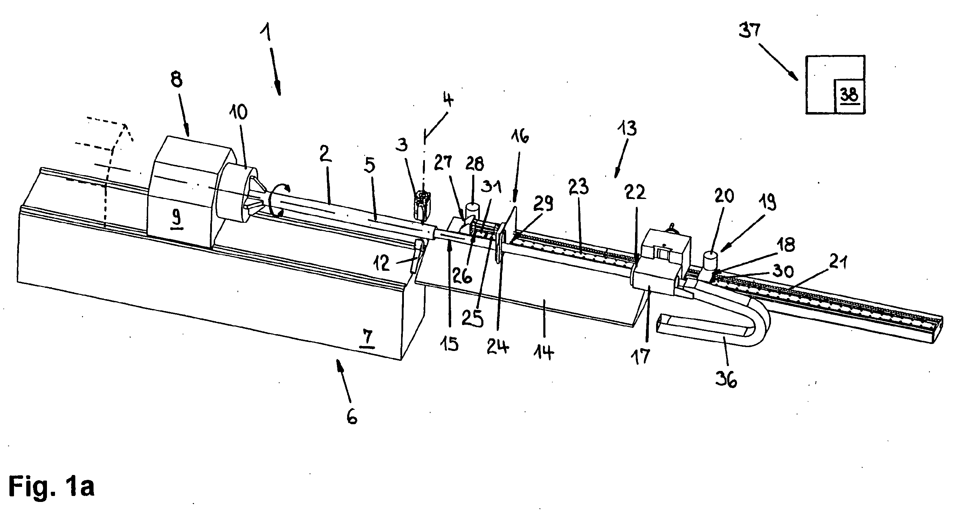

Gemäß Figur 1a ist eine maschinelle Anordnung als Laserschneidmaschine 1 zum Bearbeiten von Rohren 2 ausgeführt. Abweichend vom dem dargestellten Fall können mittels der Laserschneidmaschine 1 auch Rohre mit einem von der Kreisform abweichenden Querschnitt bearbeitet werden.

Die Laserschneidmaschine 1 besitzt einen Schneidkopf in Form eines Laserschneidkopfes 3, von welchem aus ein Laserschneidstrahl in Rohrquerrichtung auf das Rohr 2 gerichtet werden kann. Der Verlauf des Laserschneidstrahls ist durch eine Bearbeitungsachse 4 des Laserschneidkopfes 3 veranschaulicht. Bei eingeschaltetem Laserschneidstrahl fällt die Bearbeitungsachse 4 des Laserschneidkopfes 3 mit der Achse des Laserschneidstrahls zusammen. Eine strichpunktierte Linie 5 in Figur 1a veranschaulicht die Rohrlängsrichtung des Rohres 2.

Der Laserschneidkopf 3 ist in nicht im Einzelnen dargestellter Weise an einer als Maschinenbett 6 ausgebildeten Tragstruktur der Laserschneidmaschine 1 angebracht. Er ist in radialer Richtung des Rohres 2 zustellbar. Teil des Maschinenbettes 6 ist eine Parallelführung 7 für einen Rohrhalter in Form einer Dreh-/Vorschubstation 8. Die Dreh-/Vorschubstation 8 umfasst einen an der Parallelführung 7 in Rohrlängsrichtung 5 verfahrbaren Vorschubwagen 9 sowie ein an dem Vorschubwagen 9 um die in Rohrlängsrichtung 5 verlaufende Achse des Rohres 2 drehbares Spannfutter 10. An dem Spannfutter 10 ist das Rohr 2 mit seinem von dem Laserschneidkopf 3 abliegenden Längsende eingespannt. Die Drehrichtungen des Spannfutters 10 sowie des Rohres 2 sind durch einen Doppelpfeil 11 angedeutet. Unter dem Laserschneidkopf 3 ist das Rohr 2 auf einer Rohrunterstützung 12 kugelgelagert.

An der von der Dreh-/Vorschubstation 8 abliegenden Seite der Bearbeitungsachse 4 des Laserschneidkopfes 3 weist die Laserschneidmaschine 1 eine Entladeeinrichtung 13 auf. Teil der Entladeeinrichtung 13 ist eine Entladerampe 14. Außerdem umfasst die Entladeeinrichtung 13 eine Fanglanze in Form eines Catchers 15 sowie einen Abstreifer 16. Der Catcher 15 ist an einem als Catcherschlitten 17 ausgeführten Fanglanzenhalter angebracht und ragt von diesem in Richtung auf die Dreh-/Vorschubstation 8 vor. Der Catcherschlitten 17 ist an eine Antriebseinheit 18 eines motorischen Fanglanzen- bzw. Catcherantriebes 19 angekuppelt. Die Antriebseinheit 18 des Catcherantriebes 19 weist einen elektrischen Antriebsmotor 20 auf. Von diesem wird ein in den Abbildungen nicht im Einzelnen gezeigtes Antriebszahnrad angetrieben, das seinerseits in eine Antriebszahnstange 21 eingreift. Die Antriebszahnstange 21 ist an dem Maschinenbett 6 angebracht und bildet insofern eine tragstrukturseitige Antriebseinrichtung des motorischen Catcherantriebes 19.

Mittels des motorischen Catcherantriebes 19 ist der Catcherschlitten 17 gemeinschaftlich mit dem Catcher 15 in Rohrlängsrichtung 5 verfahrbar. Bei seiner Verfahrbewegung wird der Catcher 15 durch eine Fanglanzen- bzw. Catcher-Längsführung 22 geführt. Bei der Catcher-Längsführung 22 handelt es sich um eine herkömmliche Linearführung, die eine an dem Maschinenbett 6 montierte Führungsschiene 23 als tragstrukturseitige Längsführungseinrichtung umfasst. Mit der Führungsschiene 23 wirkt in üblicher Weise eine an dem Catcherschlitten 17 vorgesehene fanglanzen- bzw. catcherseitige Längsführungseinrichtung herkömmlicher Bauart zusammen.

Der Abstreifer 16 ist plattenartig ausgebildet und weist eine Durchtrittsöffnung 24 auf, an welcher er in Figur 1a von dem Catcher 15 durchsetzt wird. Ein mit dem Abstreifer 16 versehener Abstreiferschlitten 25 ist an eine Antriebseinheit 26 eines als Positionierantrieb dienenden motorischen Abstreiferantriebes 27 angekuppelt. Die Antriebseinheit 26 des motorischen Abstreiferantriebes 27 umfasst einen elektrischen Antriebsmotor 28. Dieser treibt ein Antriebszahnrad an, das seinerseits mit einer Gegenverzahnung der Antriebszahnstange 21 kämmt. Dementsprechend bildet die Antriebszahnstange 21 eine dem motorischen Catcherantrieb 19 und dem motorischen Abstreiferantrieb 27 gemeinsame tragstrukturseitige Antriebseinrichtung.

Mittels des motorischen Abstreiferantriebes 27 ist der Abstreiferschlitten 25 mit dem Abstreifer 16 u. a. relativ zu dem Laserschneidkopf 3 in Rohrlängsrichtung 5 verfahrbar. Zur Führung des Abstreiferschlittens 25 bzw. des Abstreifers 16 bei dessen Bewegung in Rohrlängsrichtung 5 dient eine Abstreifer-Längsführung 29. Auch bei der Abstreifer-Längsführung 29 handelt es sich um eine herkömmliche Linearführung. Sie umfasst eine an dem Abstreiferschlitten 25 vorgesehene abstreiferseitige Längsführungseinrichtung üblicher Bauart sowie als tragstrukturseitige Längsführungseinrichtung die Führungsschiene 23, die gleichzeitig die tragstrukturseitige Längsführungseinrichtung der Catcher-Längs-führung 22 bildet. Im Übrigen dient die Führungsschiene 23 auch als tragstrukturseitige Längsführungseinrichtung einer Antriebs-Längsführung 30 der Antriebseinheit 18 des motorischen Catcherantriebes 19 sowie als tragstrukturseitige Längsführungseinrichtung einer Antriebs-Längsführung 31 der Antriebseinheit 26 des motorischen Abstreiferantriebes 27.

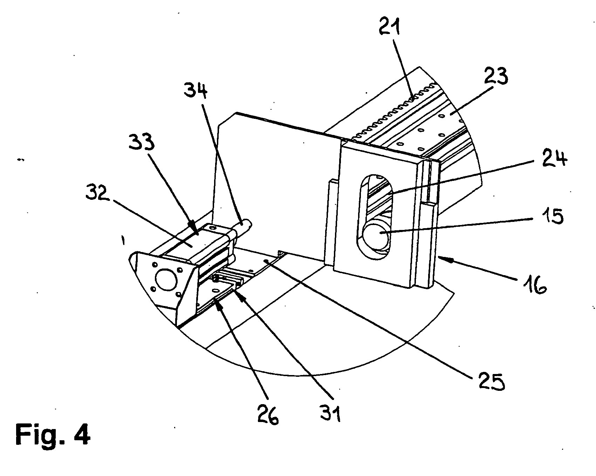

Auf der Antriebseinheit 26 des motorischen Abstreiferantriebes 27 ist neben dem elektrischen Antriebsmotor 28 ein Zylinder 32 einer für den Abstreifer 16 vorgesehenen Überlastsicherung 33 angebracht (Figur 4). Ein im Innern des Zylinders 32 geführter Kolben ist über eine in Figur 4 erkennbare Kolbenstange 34 mit dem Abstreifer 16 verbunden.

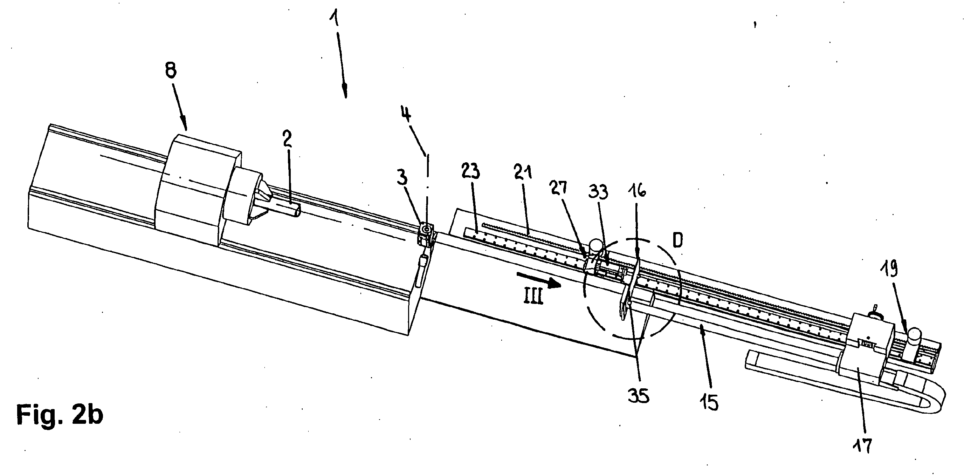

Der Catcher 15 ist an seinem freien Ende mit einer in Figur 2b erkennbaren Auffangöffnung 35 versehen. In Aufbau und Funktionsweise entspricht der Catcher 15 der in EP 1 454 700 A1 beschriebenen Kühl- und/oder Spüllanze. Bei der schneidenden Rohrbearbeitung ist die Auffangöffnung 35 im Innern des zu bearbeitenden Rohres 2 unterhalb der Bearbeitungsstelle des Laserschneidstrahles angeordnet. Im Rohrinnern anfallende Metallspritzer gelangen durch die Auffangöffnung 35 in das Catcherinnere, von wo aus sie mit Hilfe eines Spülmediums abgeführt werden. Das Spülmedium wird über den Catcherschlitten 17 in den Catcher 15 aufgegeben und - mit Verunreinigungen befrachtet - aus dem Catcher 15 abgeführt. Die Zu- und Ableitungen für das Spülmedium sind im Innern einer an dem Catcherschlitten 17 befestigten Schleppkette 36 geschützt untergebracht.

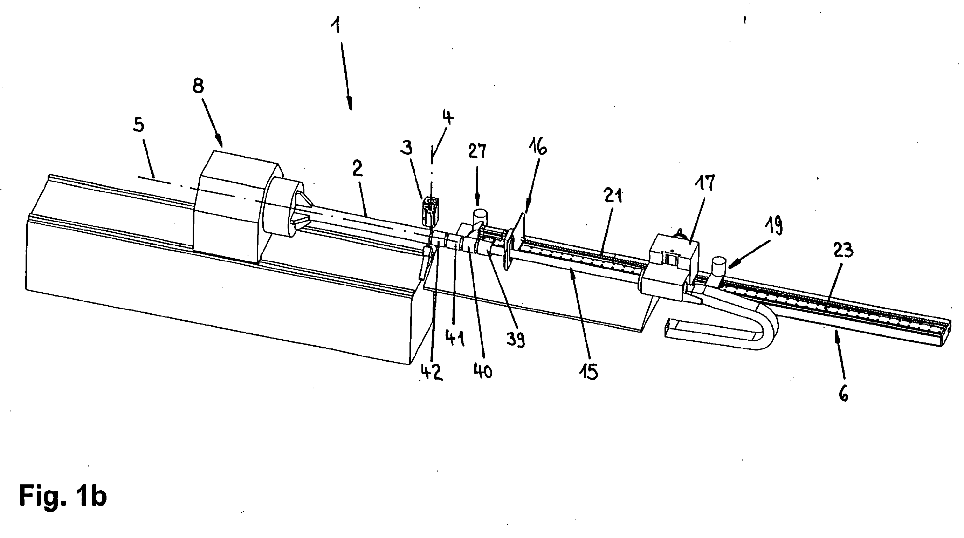

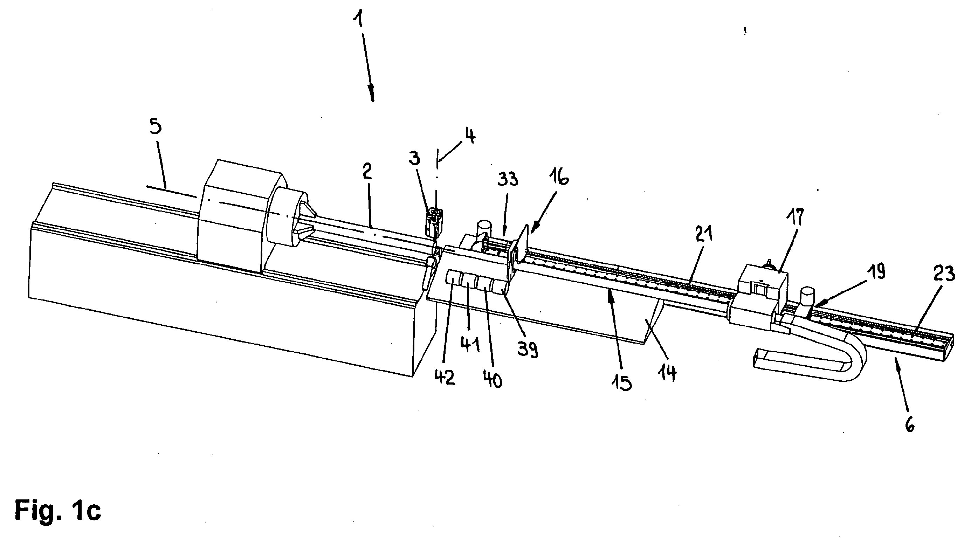

Alle wesentlichen Funktionen der Laserschneidmaschine 1 werden mittels einer numerischen Anordnungssteuerung 37 gesteuert. In die numerische Anordnungssteuerung 37 integriert ist eine Positioniersteuerung 38 für den Abstreifer 16.
Der Ablauf einer ersten Rohrbearbeitung ist anhand der Figuren 1a, 1b und 1c ersichtlich.

In diesem Beispielsfall zu bearbeiten ist ein Rohr 2 mit verhältnismäßig großem Durchmesser. Dementsprechend kann auch der zeitweise in das Rohrinnere eintauchende Catcher 15 einen verhältnismäßig großen Durchmesser aufweisen. Ein großer Catcherdurchmesser wiederum erlaubt eine große Catcherlänge, da für das Spülmedium im Catcherinnern Strömungsquerschnitte bereitgestellt werden können, die einen funktionssicheren Zu- und Abtransport von Spülmedium auch über verhältnismäßig große Weglängen gestatten. Außerdem bietet ein großer Catcherdurchmesser die Möglichkeit, den Catcher 15 mit der bei großer Catcherlänge zu fordernden erhöhten Eigensteifigkeit auszuführen.

Vor Beginn der schneidenden Rohrbearbeitung werden zunächst der Catcher 15 sowie der Abstreifer 16 bei abgeschaltetem Laserschneidstrahl in Rohrlängsrichtung 5 positioniert. Zu diesem Zweck wird der Catcher 15 mittels des motorischen Catcherantriebes 19 numerisch gesteuert in Rohrlängsrichtung derart angeordnet, dass die Auffangöffnung 35 des Catchers 15 von der Bearbeitungsachse 4 des Laserschneidkopfes 3 durchsetzt wird. Der Abstreifer 16 wird mittels des gleichfalls numerisch gesteuerten motorischen Abstreiferantriebes 27 in Rohrlängsrichtung 5 in eine Position verfahren, in welcher er von der Bearbeitungsachse 4 des Laserschneidkopfes 3 in Rohrlängsrichtung 5 einen Abstand aufweist, der auf die Gesamtlänge der nach der Rohrbearbeitung zu entladenden Fertigteile abgestimmt ist. Auf die Gesamtlänge der zu entladenden Fertigteile gleichfalls abgestimmt ist damit der schneidkopfseitige Überstand des Catchers 15 gegenüber dem Abstreifer 16. In der jeweils eingenommenen Arbeitsstellung sind der Catcher 15 über die Antriebseinheit 18, der Abstreifer 16 über die Antriebseinheit 26 lösbar verriegelt. Mit den sich in dieser Weise ergebenden Arbeitsstellungen sind der Catcher 15 in den Figuren 1a und 1b und der Abstreifer 16 in den Figuren 1a, 1b und 1c dargestellt.

Die Dreh-/Vorschubstation 8 befindet sich zunächst in ihrer schneidkopffernen Ausgangsstellung (gestrichelt angedeutete Position in Figur 1a). Bei dieser Position der Dreh-/Vorschubstation 8 wird das zu bearbeitende Rohr 2 oberhalb der Parallelführung 7 des Maschinenbettes 6 derart angeordnet, dass es mit seinem schneidkopffernen Längsende von dem Spannfutter 10 der Dreh-/Vorschubstation 8 erfasst werden kann. Mit dem eingespannten Rohr 2 verfährt die Dreh-/Vorschubstation 8 anschließend in Rohrlängsrichtung 5 und dabei in Richtung auf den Laserschneidkopf 3. Die Vorschubbewegung der Dreh-/Vorschubstation 8 endet, sobald das vorauseilende Ende des Rohres 2 mit dem gewünschten Maß über die Bearbeitungsachse 4 des Laserschneidkopfes 3 zu der Entladeseite der Laserschneidmaschine 1 hin vorsteht. Im Laufe der Vorschubbewegung des Rohres 2 läuft der Catcher 15 an dem freien Ende des Rohres 2 in das Rohrinnere ein.

Nun wird bei in Rohrlängsrichtung 5 ortsfester Dreh-/Vorschubstation 8 und bei eingeschaltetem Laserschneidstrahl das Spannfutter 10 der Dreh-/Vorschubstation 8 mit dem daran festgelegten Rohr 2 um 360° in Rohrumfangsrichtung gedreht. Bei dieser Drehbewegung wird an dem Rohr 2 ein in Rohrumfangsrichtung durchgehender Trennschnitt erstellt. Eine Verunreinigung der Rohrinnenwand durch bei dem Schneidvorgang gebildete Metallspritzer wird mittels des Catchers 15 verhindert. Ein durch den Trennschnitt von dem Rohr 2 abgetrennter Rohrabschnitt 39 wird unter Schwerkraftwirkung selbsttätig auf dem Catcher 15 abgelegt (Figur 1b).

Anschließend wird das Rohr 2 bei abgeschaltetem Laserschneidstrahl durch Verfahren der Dreh-/Vorschubstation 8 in Richtung auf den Laserschneidkopf 3 nachgesetzt. Dabei wird der auf dem Catcher 15 aufgefädelte Rohrabschnitt 39 durch das vorauseilende Ende des Rohres 2 in Richtung auf den Abstreifer 16 verschoben. Nach Beendigung der Nachsetzbewegung wird bei in Rohrlängsrichtung 5 stationärer Dreh-/Vorschubstation 8 und bei eingeschaltetem Laserschneidstrahl durch Drehen des Rohres 2 um 360° ein weiterer Trennschnitt erstellt. Auch ein dabei abgetrennter Rohrabschnitt 40 kommt selbsttätig auf dem Catcher 15 zu liegen (Figur 1b).

In dem gezeigten Beispielsfall wird der beschriebene Trennvorgang zwei weitere Male wiederholt. Dabei werden Rohrabschnitte 41, 42 abgetrennt und gleichfalls auf dem Catcher 15 aufgefädelt. Es ergeben sich damit die Verhältnisse gemäß Figur 1b. Der schneidkopfseitige Überstand des Catchers 15 gegenüber dem Abstreifer 16 ist durch die Rohrabschnitte 39, 40, 41, 42 weitgehend belegt.

Zum Entladen der Rohrabschnitte 39, 40, 41, 42 verfährt der Catcher 15 numerisch gesteuert aus seiner Arbeitsstellung gemäß den Figuren 1a und 1b in die Entladestellung gemäß Figur 1c. Dabei führt der Catcher 15 eine Relativbewegung zu dem Abstreifer 16 aus. Infolge dieser Relativbewegung werden die Rohrabschnitte 39, 40, 41, 42, deren Durchmesser die Weite der Durchtrittsöffnung 24 an dem Abstreifer 16 übersteigt, mittels des Abstreifers 16 von dem Catcher 15 abgestreift. Die Rohrabschnitte 39, 40, 41, 42 fallen unter Schwerkraftwirkung auf die Entladerampe 14, von wo aus sie in nicht im Einzelnen dargestellten Fertigteilbehältern abgelegt und schließlich aus dem Nahbereich der Laserschneidmaschine 1 abgeführt werden.

Infolge der Abstimmung der Position, welche der Abstreifer 16 in Rohrlängsrichtung 5 einnimmt, auf die Gesamtlänge der auszuschleusenden Rohrabschnitte 39, 40, 41, 42 und infolge der damit verbundenen Abstimmung des schneidkopfseitigen Überstandes des Catchers 15 gegenüber dem Abstreifer 16 ergibt sich eine optimierte, dass heißt verhältnismäßig geringe Länge des von dem Catcher 15 zum Abstreifen der Rohrabschnitte 39, 40, 41, 42 zurückzulegenden Verfahrweges.

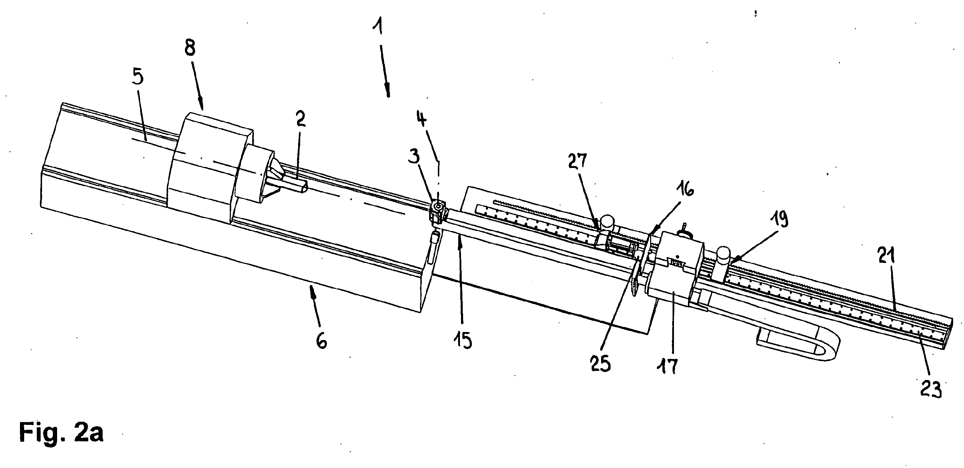

Eine Bearbeitungs- und Entladestrategie, die von der zu den Figuren 1a, 1b und 1c beschriebenen Vorgehensweise abweicht, ist gemäß den Figuren 2a und 2b realisiert. Das zu bearbeitende Rohr 2 ist in den Figuren 2a und 2b der Einfachheit halber lediglich angedeutet.

In diesem zweiten Beispielsfall wird das Rohr 2 über seine bearbeitbare Gesamtlänge in Rohrabschnitte zerlegt, die gemeinschaftlich zu entladen sind. Infolgedessen wird der Abstreifer 16 numerisch gesteuert in einer Position angeordnet, in welcher er in Rohrlängsrichtung 5 einen größeren Abstand von der Bearbeitungsachse 4 des Laserschneidkopfes 3 aufweist als in dem anhand der Figuren 1a, 1b und 1c beschriebenen Bearbeitungsfall. Der schneidkopfseitige Überstand des in der Arbeitsstellung befindlichen Catchers 15 gegenüber dem Abstreifer 16 ist in Figur 2a maximal und beträgt rund 1.500 Millimeter. Über eine entsprechende Wegstrecke ist der Catcher 15 zum Abstreifen der auf den Catcher 15 bei der Rohrbearbeitung aufgefädelten Rohrabschnitte in seine in Figur 2b gezeigte Entladestellung zu verfahren.

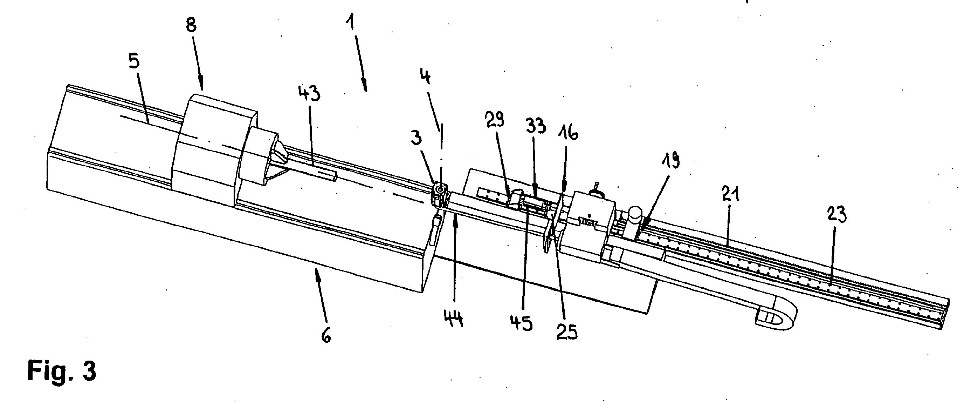

In einer dritten Position gegenüber der Bearbeitungsachse 4 des Laserschneidkopfes 3 ist der Abstreifer 16 in Figur 3 gezeigt. In diesem Beispielsfall ist ein andeutungsweise dargestelltes Rohr 43 zu bearbeiten, dessen Durchmesser wesentlich geringer ist als der Durchmesser des Rohres 2 gemäß den Figuren 1a bis 2b. Der kleinere Rohrdurchmesser erfordert einen kleineren Catcherdurchmesser. Ein entsprechend dünner Catcher 44 ist ausweislich Figur 3 vorgesehen. Ein verkleinerter Catcherdurchmesser wiederum bedingt einen verhältnismäßig engen Strömungsquerschnitt für das Spülmedium im Catcherinnern. Infolgedessen sind bei reduziertem Catcherdurchmesser auch nur reduzierte Catcherlängen realisierbar.

Ausweislich Figur 3 wird in Übereinstimmung mit dem Bearbeitungsfall gemäß den Figuren 2a und 2b die gesamte bearbeitbare Länge des Rohres 2 in Rohrabschnitte zerlegt, die sämtlich auf den Catcher 44 aufgefädelt werden und die gemeinschaftlich zu entladen sind. Auch die in Figur 3 von dem Abstreifer 16 in Rohrlängsrichtung 5 eingenommene Position sowie der schneidkopfseitige Überstand des Catchers 44 gegenüber dem Abstreifer 16 sind auf die Gesamtlänge der auf dem Catcher 44 aufzufädelnden Rohrabschnitte abgestimmt. Dementsprechend ergibt sich in dem Bearbeitungsfall gemäß Figur 3 gleichfalls eine optimierte Verfahrweglänge des Catchers 44 beim Entladen der auf dem Catcher 44 aufsitzenden Rohrabschnitte. Die von dem Catcher 44 maximal aufnehmbare Fertigteillänge beträgt etwa 800mm.

Abweichend von den in den Figuren 1a bis 2b dargestellten Verhältnissen ist der Abstreifer 16 gemäß Figur 3 manuell in Rohrlängsrichtung 5 positionierbar. Ein motorischer Abstreiferantrieb ist daher verzichtbar. An die Stelle der Antriebseinheit 26 der Anordnung nach den Figuren 1a bis 2b tritt ein mit dem Zylinder 32 der Überlastsicherung 33 versehener und mit dem Abstreiferschlitten 25 verbundener Schlitten 45 ohne Eigenantrieb. Auch der Schlitten 45 ist an der Führungsschiene 23 in Rohrlängsrichtung 5 geführt. In der Arbeitsstellung ist der Abstreifer 16 über den Schlitten 45 an der Führungsschiene 23 in Rohrlängsrichtung 5 lösbar verriegelt.

Für den Fall von Funktionsstörungen beim Abstreifen des oder der Rohrabschnitte von dem Catcher 15, 44 ist die Überlastsicherung 33 vorgesehen. Verklemmen sich die abzustreifenden Rohrabschnitte auf dem in Richtung auf seine Entladeposition bewegten Catcher 15, 44, so werden die Rohrabschnitte mit einer Kraft gegen den Abstreifer 16 gedrückt, die eine auf den Abstreifer 16 ausgeübte Haltekraft übersteigt und eine kurzhubige, von dem Laserschneidkopf 3 weg gerichtete Verlagerung des Abstreifers 16 bewirkt. Der den Abstreifer 16 tragende Abstreiferschlitten 25 bewegt sich dabei geführt längs der Führungsschiene 23 und dabei relativ zu der Antriebseinheit 26 des motorischen Abstreiferantriebes 27 oder - bei manuellem Abstreiferantrieb - relativ zu dem Schlitten 45.

Bei der kurzhubigen Ausweichbewegung nimmt der Abstreifer 16 über die Kolbenstange 34 den im Innern des Zylinders 32 der Überlastsicherung 33 geführten Kolben mit. Der Zylinder 32 ist über die in Rohrlängsrichtung 5 verriegelte Antriebseinheit 26 (Figuren 1a bis 2b) oder über den in Rohrlängsrichtung 5 verriegelten Schlitten 45 (Figur 3) in Rohrlängsrichtung wirksam fixiert. In dem von dem Kolben begrenzten Zylinderraum im Innern des Zylinders 32 ergibt sich infolge der Bewegung der Kolbenstange 34 ein Druckanstieg, aufgrund dessen der motorische Catcherantrieb 19 über entsprechende Steuerungseinrichtungen automatisch stillgesetzt und der Catcherschlitten 17 angehalten wird.

## Patentansprüche

1. Maschinelle Anordnung zum schneidenden Bearbeiten von Rohren (2, 43) mittels eines Schneidstrahls, mit
- einem Schneidkopf (3),
- einem Rohrhalter (8),
- einer Fanglanze (15, 44) sowie
- einem Abstreifer (16),
wobei
- von dem Schneidkopf (3) aus der Schneidstrahl entlang einer Bearbeitungsachse (4) des Schneidkopfes (3), die bei eingeschaltetem Schneidstrahl die Schneidstrahlachse bildet, in Rohrquerrichtung auf ein zu bearbeitendes Rohr (2, 43) richtbar ist und der Schneidstrahl und das Rohr (2, 43) unter Abtrennen wenigstens eines Rohrabschnittes (39, 40, 41, 42) relativ zueinander in Rohrumfangsrichtung bewegbar sind,
- der Rohrhalter (8), in Rohrlängsrichtung (5) gesehen, an einer Seite der Bearbeitungsachse (4) des Schneidkopfes (3) angeordnet und zur Festlegung des zu bearbeitenden Rohres (2, 43) vorgesehen ist,
- der Abstreifer (6) an der dem Rohrhalter (8) in Rohrlängsrichtung (5) gegenüberliegenden Seite der Bearbeitungsachse (4) des Schneidkopfes (3) angeordnet ist,
- die Fanglanze (15, 44) an der dem Rohrhalter (8) in Rohrlängsrichtung (5) gegenüberliegenden Seite der Bearbeitungsachse (4) des Schneidkopfes (3) in das Rohrinnere des zu bearbeitenden Rohres (2, 43) einführbar und dabei mit einem Überstand gegenüber dem Abstreifer (16) in Rohrlängsrichtung (5) zu der Bearbeitungsachse (4) des Schneidkopfes (3) hin anordenbar ist,
- wenigstens ein abgetrennter Rohrabschnitt (39, 40, 41, 42) an der zu der Bearbeitungsachse (4) des Schneidkopfes (3) hin liegenden Seite des Abstreifers (16) auf der Fanglanze (15, 44) ablegbar ist und
- der oder die auf der Fanglanze (15, 44) abgelegten Rohrabschnitte (39, 40, 41, 42) mittels des Abstreifers (16) von der Fanglanze (15, 44) abstreifbar ist bzw. sind, indem die Fanglanze (15, 44) mit einer von der Bearbeitungsachse (4) des Schneidkopfes (3) weg gerichteten Rückzugsbewegung relativ zu dem Abstreifer (16) in Rohrlängsrichtung (5) bewegbar ist,
**dadurch gekennzeichnet, dass**
der Abstreifer (16) gegenüber der Bearbeitungsachse (4) des Schneidkopfes (3) in Rohrlängsrichtung (5) mit einer Positionierbewegung in unterschiedliche Positionen überführbar ist.

2. Maschinelle Anordnung nach Anspruch 1, **dadurch gekennzeichnet, dass** für den Abstreifer (16) eine Abstreifer-Längsführung (29) vorgesehen ist, mittels derer der Abstreifer (16) bei der Positionierbewegung in Rohrlängsrichtung (5) geführt ist.

3. Maschinelle Anordnung nach einem der vorhergehenden Ansprüche, **dadurch gekennzeichnet, dass** für die Fanglanze (15, 44) eine Fanglanzen-Längsführung (22) vorgesehen ist, mittels derer die Fanglanze (15, 44) bei der Bewegung in Rohrlängsrichtung (5) geführt ist und dass eine Tragstruktur (6) der maschinellen Anordnung (1) eine tragstrukturseitige Längsführungseinrichtung (23) aufweist, wobei die tragstrukturseitige Längsführungseinrichtung (23) gemeinschaftlich mit einer abstreiferseitigen Längsführungseinrichtung die Abstreifer-Längsführung (29) und gemeinschaftlich mit einer fanglanzenseitigen Längsführungseinrichtung die Fanglanzen-Längsführung (22) ausbildet.

4. Maschinelle Anordnung nach einem der vorhergehenden Ansprüche, **dadurch gekennzeichnet, dass** die Fanglanze (15, 44) mit einer Antriebseinheit (18) eines motorischen Fanglanzenantriebes (19) verbunden ist, mittels dessen die Fanglanze (15, 44) in Rohrlängsrichtung (5) bewegbar ist und dass für die Antriebseinheit (18) des Fanglanzenantriebes (19) eine Antriebs-Längsführung (30) vorgesehen ist, welche von der tragstrukturseitigen Längsführungseinrichtung (23) sowie von einer antriebsseitigen Längsführungseinrichtung an der Antriebseinheit (18) ausgebildet ist.

5. Maschinelle Anordnung nach einem der vorhergehenden Ansprüche, **dadurch gekennzeichnet, dass** die Abstreifer-Längsführung (29) und/oder die Fanglanzen-Längsführung (22) und/oder die Antriebs-Längsführung (30) als Linearführung ausgebildet ist bzw. sind.

6. Maschinelle Anordnung nach einem der vorhergehenden Ansprüche, **dadurch gekennzeichnet, dass** der Abstreifer (16) manuell angetrieben in Rohrlängsrichtung in unterschiedliche Positionen überführbar ist.

7. Maschinelle Anordnung nach einem der vorhergehenden Ansprüche, **dadurch gekennzeichnet, dass** der Abstreifer (16) mittels eines motorischen Positionierantriebes (27) in Rohrlängsrichtung (5) in unterschiedliche Positionen überführbar ist.

8. Maschinelle Anordnung nach einem der vorhergehenden Ansprüche, **dadurch gekennzeichnet, dass** der Abstreifer (16) mittels eines motorischen Positionierantriebes (27) in Rohrlängsrichtung (5) in unterschiedliche Positionen überführbar ist, dass die Fanglanze (15, 44) mittels eines motorischen Fanglanzenantriebes (19) in Rohrlängsrichtung (5) bewegbar ist und dass eine Tragstruktur (6) der maschinellen Anordnung (1) eine tragstrukturseitige Antriebseinrichtung (21) aufweist, wobei die tragstrukturseitige Antriebseinrichtung (21) gemeinschaftlich mit einer abstreiferseitigen Antriebseinrichtung den motorischen Positionierantrieb (27) des Abstreifers (16) und gemeinschaftlich mit einer fanglanzenseitigen Antriebseinrichtung den motorischen Fanglanzenantrieb (19) ausbildet.

9. Maschinelle Anordnung nach einem der vorhergehenden Ansprüche, **dadurch gekennzeichnet, dass** für den Abstreifer (16) eine numerische Positionssteuerung (38) vorgesehen ist, mittels derer die unterschiedlichen Positionen des Abstreifers (16) in Rohrlängsrichtung (5) definierbar sind.

10. Maschinelle Anordnung nach einem der vorhergehenden Ansprüche, **dadurch gekennzeichnet, dass** die numerische Positionssteuerung (38) für den Abstreifer (16) in eine übergeordnete numerische Anordnungssteuerung (37) der maschinellen Anordnung (1) integriert ist.

11. Maschinelle Anordnung nach einem der vorhergehenden Ansprüche, **dadurch gekennzeichnet, dass** mittels einer numerischen Anordnungssteuerung (37) die von dem Abstreifer (16) in Rohrlängsrichtung (5) eingenommenen Positionen erfassbar und Funktionen der maschinellen Anordnung (1) in Abhängigkeit von den erfassten Positionen des Abstreifers (16) steuerbar sind.

## Claims

1. A mechanical arrangement for processing pipes (2, 43) by cutting using a cutting beam, comprising
- a cutting head (3),
- a pipe holder (8),
- a catching lance (15, 44) and
- a stripper (16),
wherein
- from the cutting head (3) the cutting beam may be directed onto a pipe (2, 43) to be processed, along a processing axis (4) of the cutting head (3), which axis forms the cutting beam axis when the cutting beam is switched on, and in the transverse direction of the pipe, and the cutting beam and the pipe (2, 43) are movable relative to each other in the circumferential direction of the pipe with at least one pipe portion (39, 40, 41, 42) being severed,
- the pipe holder (8), viewed in the longitudinal direction (5) of the pipe, is disposed on one side of the processing axis (4) of the cutting head (3) and is provided for fixing the pipe (2, 43) to be processed,
- the stripper (16) is disposed on that side of the processing axis (4) of the cutting head (3) which is opposite the pipe holder (8) in the longitudinal direction (5) of the pipe,
- the catching lance (15, 44) is insertable into the interior of the pipe (2, 43) to be processed on that side of the processing axis (4) of the cutting head (3) which is opposite the pipe holder (8) in the longitudinal direction (5) of the pipe and may in so doing be arranged with a projecting length relative to the stripper (16) in the longitudinal direction (5) of the pipe and towards the processing axis (4) of the cutting head (3),
- at least one severed pipe portion (39, 40, 41, 42) may be deposited on the catching lance (15, 44) on the side of the stripper (16) which is towards the processing axis (4) of the cutting head (3), and
- the pipe portion(s) (39, 40, 41, 42) deposited on the catching lance (15, 44) may be stripped off the catching lance (15, 44) by means of the stripper (16) by virtue of the catching lance (15, 44) being movable relative to the stripper (16) in the longitudinal direction (5) of the pipe with a withdrawal movement away from the processing axis (4) of the cutting head (3),
**characterised in that**
the stripper (16) is transferable relative to the processing axis (4) of the cutting head (3) in the longitudinal direction (5) of the pipe to various positions by means of a positioning movement.

2. A mechanical arrangement according to claim 1, **characterised in that**, for the stripper (16), a longitudinal stripper guide (29) is provided by means of which the stripper (16) is guided in the longitudinal direction (5) of the pipe during the positioning movement.

3. A mechanical arrangement according to either of the preceding claims, **characterised in that**, for the catching lance (15, 44), a longitudinal catching lance guide (22) is provided by means of which the catching lance (15, 44) is guided during the movement in the longitudinal direction (5) of the pipe, and a support structure (6) of the mechanical arrangement (1) has a longitudinal guide device (23) on the support structure side, the longitudinal guide device (23) on the support structure side forming together with a longitudinal guide device on the stripper side the longitudinal stripper guide (29) and forming together with a longitudinal guide device on the catching lance side the longitudinal catching lance guide (22).

4. A mechanical arrangement according to any one of the preceding claims, **characterised in that** the catching lance (15, 44) is connected to a drive unit (18) of a motor-powered catching lance drive (19) by means of which the catching lance (15, 44) is movable in the longitudinal direction (5) of the pipe, and there is provided for the drive unit (18) of the catching lance drive (19) a longitudinal drive guide (30) which is formed by the longitudinal guide device (23) on the support structure side and by a longitudinal guide device on the drive unit (18) on the drive side.

5. A mechanical arrangement according to any one of the preceding claims, **characterised in that** the longitudinal stripper guide (29) and/or the longitudinal catching lance guide (22) and/or the longitudinal drive guide (30) is/are in the form of a linear guide.

6. A mechanical arrangement according to any one of the preceding claims, **characterised in that** the stripper (16) is transferable to various positions in the longitudinal direction of the pipe by a manual drive.

7. A mechanical arrangement according to any one of the preceding claims, **characterised in that** the stripper (16) is transferable to various positions in the longitudinal direction (5) of the pipe by means of a motor-powered positioning drive (27).

8. A mechanical arrangement according to any one of the preceding claims, **characterised in that** the stripper (16) is transferable to various positions in the longitudinal direction (5) of the pipe by means of a motor-powered positioning drive (27), the catching lance (15, 44) is movable in the longitudinal direction (5) of the pipe by means of a motor-powered catching lance drive (19), and a support structure (6) of the mechanical arrangement (1) has a drive device (21) on the support structure side, the drive device (21) on the support structure side forming together with a drive device on the stripper side the motor-powered positioning drive (27) of the stripper (16) and forming together with a drive device on the catching lance side the motor-powered catching lance drive (19).

9. A mechanical arrangement according to any one of the preceding claims, **characterised in that** a numerical position control (38) is provided for the stripper (16), by means of which control (38) the various positions of the stripper (16) in the longitudinal direction (5) of the pipe may be defined.

10. A mechanical arrangement according to any one of the preceding claims, **characterised in that** the numerical position control (38) for the stripper (16) is integrated into a higher-level numerical arrangement control (37) of the mechanical arrangement (1).

11. A mechanical arrangement according to any one of the preceding claims, **characterised in that** by means of a numerical arrangement control (37) the positions adopted by the stripper (16) in the longitudinal direction (5) of the pipe may be detected and functions of the mechanical arrangement (1) may be controlled as a function of the detected positions of the stripper (16).

## Revendications

1. Dispositif de machine pour le découpage de tubes (2, 43) par un jet de découpage, avec
- une tête de découpage (3),
- un support de tube (8),
- une lance de capture (15, 44) et
- un organe d'enlèvement (16),
sachant que
- en partant de la tête de découpage (3), le jet de découpage peut être dirigé, le long d'un axe d'usinage (4) de la tête de découpage (3) qui constitue l'axe de jet de découpage lorsque le jet de découpage est activé, dans la direction transversale du tube sur un tube (2, 43) à usiner, et le jet de découpage et le tube (2, 43) peuvent être déplacés l'un par rapport à l'autre dans la direction circonférentielle du tube avec détachement d'au moins un tronçon de tube (39, 40, 41, 42),
- le support de tube (8) est disposé, considéré dans la direction longitudinale (5) du tube, sur un côté de l'axe d'usinage (4) de la tête de découpage (3) et est prévu pour fixer en position le tube (2, 43) à usiner,
- l'organe d'enlèvement (16) est disposé sur le côté de l'axe d'usinage (4) de la tête de découpage (3) qui est opposé au support de tube (8) dans la direction longitudinale (5) du tube,
- la lance de capture (15, 44) peut être introduite à l'intérieur du tube (2, 43) à usiner sur le côté de l'axe d'usinage (4) de la tête de découpage (3) qui est opposé au support de tube (8) dans la direction longitudinale (5) du tube, et peut être alors disposée en dépassant l'organe d'enlèvement (16) dans la direction longitudinale (5) du tube en direction de l'axe d'usinage (4) de la tête de découpage (3),
- au moins un tronçon de tube détaché (39, 40, 41, 42) peut être déposé sur la lance de capture (15, 44) sur le côté de l'organe d'enlèvement (16) qui est tourné vers l'axe d'usinage (4) de la tête de découpage (3), et
- le ou les tronçons de tube (39, 40, 41, 42) déposés sur la lance de capture (15, 44) peuvent être enlevés de la lance de capture (15, 44) au moyen de l'organe d'enlèvement (16), par le fait que la lance de capture (15, 44) peut être déplacée par rapport à l'organe d'enlèvement (16) dans la direction longitudinale (5) du tube par un mouvement de retrait dirigé en éloignement de l'axe d'usinage (4) de la tête de découpage (3),
**caractérisé en ce que** l'organe d'enlèvement (16) peut, par un mouvement de positionnement, être transféré dans différentes positions par rapport à l'axe d'usinage (4) de la tête de découpage (3) dans la direction longitudinale (5) du tube.

2. Dispositif selon la revendication 1, **caractérisé en ce qu'**un guide longitudinal (29) d'organe d'enlèvement est prévu pour l'organe d'enlèvement (16), au moyen duquel l'organe d'enlèvement (16) est guidé lors du mouvement de positionnement dans la direction longitudinale (5) du tube.

3. Dispositif selon l'une des revendications précédentes, **caractérisé en ce qu'**un guide longitudinal (22) de lance de capture est prévu pour la lance de capture (15, 44), au moyen duquel la lance de capture (15, 44) est guidée lors du déplacement dans la direction longitudinale (5) du tube, et **en ce qu'**une structure porteuse (6) du dispositif (1) présente un organe de guide longitudinal (23) côté structure porteuse, l'organe de guide longitudinal (23) côté structure porteuse formant conjointement avec un organe de guide longitudinal côté organe d'enlèvement le guide longitudinal (29) d'organe d'enlèvement et conjointement avec un organe de guide longitudinal côté lance de capture le guide longitudinal (22) de lance de capture.

4. Dispositif selon l'une des revendications précédentes, **caractérisé en ce que** la lance de capture (15, 44) est reliée à une unité d'entraînement (18) d'un entraînement motorisé (19) de lance de capture au moyen duquel la lance de capture (15, 44) peut être déplacée dans la direction longitudinale (5) du tube, et **en ce qu'**il est prévu pour l'unité d'entraînement (18) de l'entraînement de lance de capture (19) un guide longitudinal d'entraînement (30) qui est formé par l'organe de guide longitudinal (23) côté structure porteuse et par un organe de guide longitudinal côté entraînement qui est prévu sur l'unité d'entraînement (18).

5. Dispositif selon l'une des revendications précédentes, **caractérisé en ce que** le guide longitudinal (29) d'organe d'enlèvement et/ou le guide longitudinal (22) de lance de capture et/ou le guide longitudinal d'entraînement (30) est ou sont réalisés sous forme de guides linéaires.

6. Dispositif selon l'une des revendications précédentes, **caractérisé en ce que** l'organe d'enlèvement (16) peut être transféré dans différentes positions dans la direction longitudinale du tube en étant entraîné manuellement.

7. Dispositif selon l'une des revendications précédentes, **caractérisé en ce que** l'organe d'enlèvement (16) peut être transféré dans différentes positions dans la direction longitudinale (5) du tube au moyen d'un entraînement motorisé de positionnement (27).

8. Dispositif selon l'une des revendications précédentes, **caractérisé en ce que** l'organe d'enlèvement (16) peut être transféré dans différentes positions dans la direction longitudinale (5) du tube au moyen d'un entraînement motorisé de positionnement (27), **en ce que** la lance de capture (15, 44) peut être déplacée dans la direction longitudinale (5) du tube au moyen d'un entraînement motorisé (19) de lance de capture et **en ce qu'**une structure porteuse (6) du dispositif (1) présente un organe d'entraînement (21) côté structure porteuse (6), l'organe d'entraînement (21) côté structure porteuse (6) formant conjointement avec un organe d'entraînement côté organe d'enlèvement l'entraînement motorisé de positionnement (27) de l'organe d'enlèvement (16) et conjointement avec un organe d'entraînement côté lance de capture l'entraînement motorisé (19) de lance de capture.

9. Dispositif selon l'une des revendications précédentes, **caractérisé en ce qu'**une commande numérique de position (38) est prévue pour l'organe d'enlèvement (16), au moyen de laquelle les différentes positions de l'organe d'enlèvement (16) dans la direction longitudinale (5) du tube peuvent être définies.

10. Dispositif selon l'une des revendications précédentes, **caractérisé en ce que** la commande numérique de position (38) pour l'organe d'enlèvement (16) est intégrée dans une commande numérique supérieure (37) du dispositif (1).

11. Dispositif selon l'une des revendications précédentes, **caractérisé en ce qu'**une commande numérique (37) du dispositif permet de détecter les positions prises par l'organe d'enlèvement (16) dans la direction longitudinale (5) du tube et de commander des fonctions du dispositif (1) en fonction des positions détectées de l'organe d'enlèvement (16).
